# EUROPÄISCHE PATENTSCHRIFT

(11) **EP 2 030 348 B1**
(45) Veröffentlichungstag und Bekanntmachung des Hinweises auf die Patenterteilung: **27.01.2016**
(21) Anmeldenummer: 07727312.6
(22) Anmeldetag: 23.03.2007
(51) Int. Cl.: H04H 20/00

(54) **VERFAHREN ZUR SIGNALISIERUNG EINER VERBINDUNGSAUFFORDERUNG ZWISCHEN DATENVERARBEITUNGSGERÄTEN, BEI DEM ÜBER RUNDFUNK EIN VERBINDUNGSAUFRUF AUSGESTRAHLT WIRD**
METHOD FOR SIGNALLING A CONNECTION REQUEST
PROCEDE DE SIGNALISATION D'UNE INVITATION A ETABLIR UNE LIAISON

(30) Priorität: 11.05.2006 DE 102006021947
(43) Veröffentlichungstag der Anmeldung: 04.03.2009
(73) Patentinhaber: Robert Bosch GmbH, 70442 Stuttgart (DE)
(72) Erfinder: HINRICHS, Andreas, 31199 Diekholzen (DE); VOGEL, Peter, 31139 Hildesheim (DE); WILDSCHUETTE, Florian, 31139 Hildesheim (DE)
(86) Internationale Anmeldenummer: PCT/EP2007/052838
(87) Internationale Veröffentlichungsnummer: WO 2007/131825

(56) Entgegenhaltungen:
- WO-A-2005/114878
- ANONYMOUS: 'Push Proxy Gateway Service ; OMA-WAP-TS-PPGService-V2_1-20051122-C' OMA-WAP-TS-PPGSERVICE-V2_1-20051122-C, OPEN MOBILE ALLIANCE (OMA), 4330 LA JOLLA VILLAGE DR., SUITE 110 SAN DIEGO, CA 92122 ; USA 22 November 2005, Seiten 1 - 20, XP064125452
- ANONYMOUS: 'Push proxy gateway', [Online] 03 Mai 2006, INTERNET, XP055075901 Gefunden im Internet: <URL:http://en.wikipedia.org/w/index.php?ti tle=Push_Proxy_Gateway&oldid=51326884> [gefunden am 2013-08-21]

## Beschreibung

Die Erfindung betrifft ein Verfahren zur Signalisierung einer Verbindungsaufforderung, eine Anordnung zur Signalisierung einer Verbindungsaufforderung, ein Datenendgerät, ein Computerprogramm und ein Computerprogrammprodukt.

### Stand der Technik

Im Internet werden Daten üblicherweise im Client-Server-Betrieb ausgetauscht. Dabei baut ein Client, wobei es sich üblicherweise um ein Programm auf einem Datenendgerät, bspw. einer Recheneinrichtung eines Nutzers, handelt, zunächst eine Verbindung zu einem Server auf und fordert anschließend Daten von diesem Server an. Dies kann bedeuten, dass ein Browser als Client HTML-Seiten von einem Server anfordert. Ein solches Vorgehen, bei dem Daten erst auf Anforderung gesendet und somit von dem Client gezogen werden, wird als "Pull" bezeichnet.

Theoretisch könnte der Server seine Informationen auch unaufgefordert, d.h. ohne vorher eine Anfrage empfangen zu haben, an den Client senden, was als "Push" bezeichnet wird. Bisher haben sich solche Anwendungen im Internet allerdings nur in Teilbereichen, z.B. beim sog. "Instant Messaging", etabliert

Von der Organisation "Open Mobile Alliance" (OMA, früher WAP-Forum) wurde eine "Push"-Protokollfamilie entwickelt, mit der von einem Internet-Server Daten an ein mobiles Datenendgerät bzw. Terminal (MT) als Datenpush gesendet und somit von dem Internet-Server gepusht bzw. abgestoßen werden können.

Hierbei ist jedoch vorgesehen, dass ein Internet-Server als Push Initiator (P1), der einen Push und somit einen Versand der Daten in die Wege leitet, die Daten nicht direkt an das mobile Terminal sendet. Über ein "Push Proxy Gateway" (PPG), d. h. einen Protokollumsetzer zur Datenübermittlung bzw. eine Netzwerkübergangseinrichtung, werden die Daten optimal an eine zur drahtlosen Übermittlung geeignete Luftschnittstelle angepasst. Die Daten können dabei entweder als HTTP- oder WAP(WSP)-Nachricht von dem PPG an das mobile Datenendgerät geschickt und somit übermittelt werden. Diese Vorgehensweise ist im sog. "Push Over-the-Air"-Protokoll (Push-OTA) zum drahtlosen Push und somit Versand von Daten festgelegt.

In einer optionalen Erweiterung können derartige Daten in einem zum Einrichten von "Multimedia Sessions" geeigneten sog. "Session-Initiation-Push"-Protokoll (SIP) der IETF (Internet Engineering Task Force), einer Organisation, die Standards für das Internet festlegt, verpackt an das mobile Terminal als OTA-SIP geschickt werden. Somit kann eine Interoperabilität zwischen mindestens zwei verschiedenen Teilnehmern und somit Daten austauschenden Plattformen.erhöht werden.

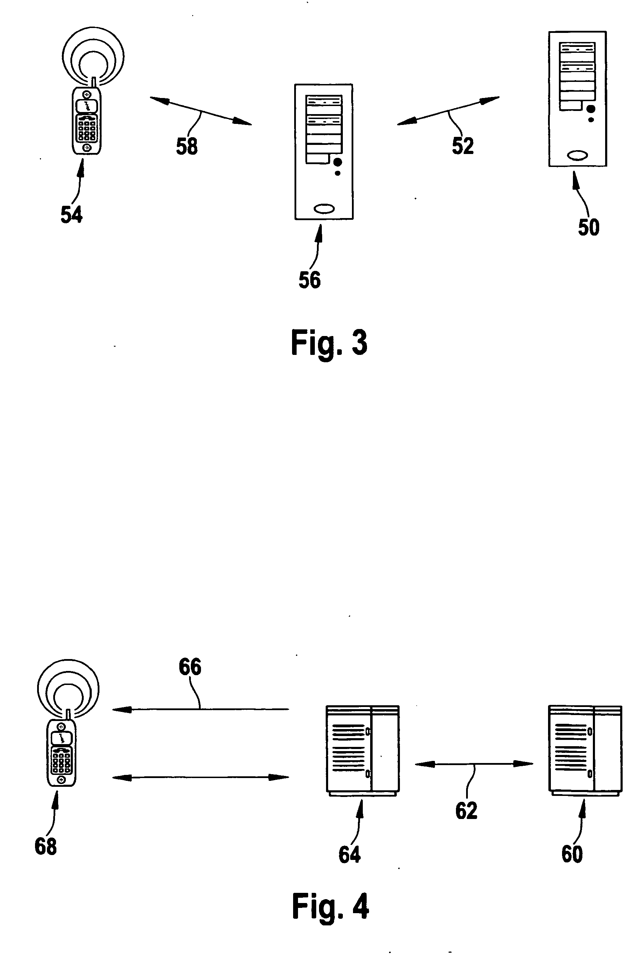

Ein beispielhafter Ablauf einer derartigen Datenübermittlung ist in Figur 3 schematisch dargestellt: ein Internet Server 50 als Push-Initiator sendet zunächst eine Nachricht 52 bzw. Message mit den Kontrolldaten für ein bestimmtes mobiles Datenendgerät 54, bspw. ein Mobiltelefon, über ein "Push-Access"-Protokoll (PAP) an eine Netzübergangseinrichtung 56 und signalisiert, dass diese Nachricht 52 an das bestimmte Datenendgerät 54 geschickt werden soll. Hierzu muss die Netzübergangseinrichtung 56 über OTA-WSP bzw. OTA-HTTP mittels eines "Push Over-the-Air"-Protokolls 58 zu dem Datenendgerät 54 Kontakt aufnehmen.

Mobilfunkbetreiber lassen es in der Regel jedoch nicht zu, dass ein beliebiger externer Server aus dem Internet unaufgefordert eine Verbindung zu einem mobilen Teilnehmer herstellt. Dies bedeutet, dass die gewünschte WSP-Session bzw. eine TCP/IP-Verbindung von dem mobilen Datenandgerät aus aufgebaut werden muss.

Um trotzdem eine Initiierung von außen zu ermöglichen, definiert das OMA Push Protokoll den sog. "Session Initiation Request" (SIR), eine Anfrage zur Einleitung einer Sitzung, und die "Session Initiation Application" (SIA), eine Anwendung zur Einleitung einer Sitzung. Bei der SIA handelt es sich um eine Anwendung, die im mobilen Terminal abläuft und dem PPG ermöglicht, das Datenendgerät aufzufordern, eine Push-Session oder eine aktive TCP/IP-Verbindung zu eröffnen, um darüber Daten zu dem Datenendgerät zu übertragen.

Eine mögliche Vorgehensweise hierzu ist in Figur 4 schematisch dargestellt. Nachdem ein Internet-Server 60 über ein "Push Over-the-Air"-Protokoll 62 einen Push (Anstoß) initiiert und eine entsprechende Nachricht an eine Netzübergangseinrichtung 64 übermittelt hat, wird ein Verbindungsaufruf 66 (SIR) von der Netzübergangseinrichtung 64 an ein mobiles Datenendgerät 68 gesendet, damit dieses eine Push-Session oder aktive TCP/IP-Verbindung mittels des "Push Over-the-Air"-Protokolls 62 und über die Netzübergangseinrichtung 64 zu dem Internet-Server 60 aufbaut. Für den Inhalt des SIR bzw. der SIA wird eine spezielle, relativ einfache Codierung benutzt (bspw. vom Typ "application/vnd.wap.sia"), so dass die Nachricht einen geringen Datenumfang aufweist. Daher kann man einen Verbindungsaufruf 66 bzw. SIR z.B. auch über SMS (Kurznachricht) übertragen.

Aus der WO 2005/114878 A1 ist ein Verfahren zur individuellen Steuerung von Endgeräten durch ein Broadcast-Signal bekannt. Hierbei wird bei einem Eintreffen eines bestimmbaren Broadcast-Signals, das zuvor individuell festgelegten Kriterien entspricht, eine Aktivität eines Geräts, dass das Signal empfängt, ausgelöst. Hierbei ist es möglich, dass die Funktion, die ausgelöst ist, ein Aufbau einer neuen Verbindung ist, vorzugsweise einer Telekommunikationsverbindung.

Aus der Entwurfs-Version vom 22. November 2005 "Push Proxy Gateway Service", open mobile alliance OMA-WAP-TS-PPGService-V2_1-20051122-C der open mobile alliance limited ist ein Pushdatendienst mittles des Internets bekannt.

### Offenbarung der Erfindung

Die Erfindung betrifft ein Verfahren zur Signalisierung einer Verbindungsaufforderung zwischen Datenverarbeitungsgeräten, bei dem über Rundfunk ein Verbindungsaufruf ausgestrahlt wird, mit dem mindestens ein Datenendgerät dazu aufgerufen wird, über ein Funknetz eine zum Übertragen der Daten geeignete Verbindung aufzubauen. Die zum Übertragen der Daten geeignete Verbindung kann über ein als Mobilfunknetz ausgebildetes Funknetz aufgebaut werden.

Mit dem über Rundfunk und somit über ein unidirektionales Funknetz ausgestrahlten Verbindungsaufruf wird dem Datenverarbeitungsgerät, das als das mindestens eine Datenendgerät ausgebildet ist und üblicherweise einen Zugang zum Internet aufweist, signalisiert, dass die Daten zur Verfügung stehen. Nachdem die zur Übertragung der Daten geeignete Verbindung zu einer Netzübergangseinrichtung oder einem Server als Datenverarbeitungsgerät aufgebaut ist, wobei der Server die Daten zur Verfügung stellt und/oder bereitstellt, können diese Daten angefordert und geladen werden. Eine Übermittlung der Daten erfolgt über ein bidirektionales Funknetz, das sich von dem unidirektionalen Rundfunknetz, das zur Übermittlung des Verbindungsaufrufs verwendet wird, unterscheidet. Als bidirektionales Funknetz ist insbesondere ein Mobilfunknetz geeignet.

Die Erfindung betrifft außerdem eine Anordnung zur Signalisierung einer Verbindungsaufforderung zwischen Datenverarbeitungsgeräten, die mindestens eine Sendeeinrichtung als Luftschnittstelle aufweist. Die mindestens eine Sendeeinrichtung ist dazu ausgebildet, über Rundfunk einen Verbindungsaufruf auszustrahlen und mittels des Verbindungsaufrufs mindestens ein Datenendgerät dazu aufzurufen, über ein Funknetz eine zum Übertragen der Daten geeignete Verbindung zu öffnen oder aufzubauen.

Diese Anordnung weist mindestens einen Server, der dazu ausgebildet ist, die Daten zur Verfügung zu stellen, und mindestens eine Netzübergangseinrichtung auf. Die Netzübergangseinrichtung ist dazu ausgebildet, einen drahtlosen Datenaustausch mit dem Datenendgerät zu gewährleisten.

Dies bedeutet, dass die Netzübergangseinrichtung dazu dient, Informationen zu dem Verbindungsaufruf oder den Verbindungsaufruf, soweit von dem Server als Push-Initiator zur Verfügung gestellt, zur drahtlosen Übertragung über Rundfunk aufzubereiten und somit zur Ausstrahlung bereitzustellen. Der Server initiiert demnach den Verbindungsaufruf und somit die Datenübertragung. Des weiteren kann die Netzübergangseinrichtung auch als Luftschnittstelle für den Server und somit zur drahtlosen Kommunikation zwischen dem Server und dem mindestens einen Datenendgerät verwendet werden. Sobald dem Datenendgerät mit dem Verbindungsaufruf signalisiert wird, dass für das Datenendgerät vorgesehene Daten vorliegen und falls Interesse an diesen Daten besteht, baut das Datenendgerät über das Funknetz, das insbesondere als Mobilfunknetz ausgebildet ist, und die Netzübergangseinrichtung als Luftschnittstelle die zum Übertragen der Daten geeignete Verbindung zu dem Server auf. Eine von dem Server ausgehende Übertragung der Daten zu dem Datenendgerät erfolgt über dieselbe Verbindung.

Das erfindungsgemäße Datenendgerät ist dazu geeignet, einen über Rundfunk bzw. über ein Rundfunksystem ausgestrahlten Verbindungsaufruf, mit dem für das Datenendgerät bereitgestellte Daten angekündigt werden, zu empfangen, und durch diesen Verbindungsaufruf aufgerufen über ein Funknetz eine zum Empfang der Daten geeignete Verbindung zu öffnen.

Die Anordnung und das Datenendgerät sind zur Ausführung des erfindungsgemäßen Verfahrens ausgebildet. Das Datenendgerät ist zur drahtlosen Kommunikation über mehrere Frequenzbänder vorgesehen, so dass das Datenendgerät Daten auf mindestens einer Rundfunkfrequenz und auf mindestens einer Mobilfunkfrequenz jeweils zumindest empfangen und/oder senden kann.

Das erfindungsgemäße Computerprogramm mit Programmcodemitteln ist dazu ausgebildet, alle Schritte eines erfindungsgemäßen Verfahrens durchzuführen, wenn das Computerprogramm auf einem Computer oder einer entsprechenden Recheneinheit, insbesondere in einer erfindungsgemäßen Anordnung oder einem erfindungsgemäßen Datenendgerät, ausgeführt wird.

Die Erfindung betrifft des weiteren ein Computerprogrammprodukt mit Programmcodemitteln, die auf einem computerlesbaren Datenträger gespeichert sind, um alle Schritte eines erfindungsgemäßen Verfahrens durchzuführen, wenn das Computerprogramm auf einem Computer oder einer entsprechenden Recheneinheit, insbesondere in einer erfindungsgemäßen Anordnung oder einem erfindungsgemäßen Datenendgerät, ausgeführt wird.

Rundfunk, engl. broadcast, umfasst die für jeden empfangbare Übertragung von bspw. audiovisuellen Daten und/oder Informationen. Dabei erfolgt diese Übertragung über elektromagnetische Wellen. Über Rundfunk ist somit eine öffentliche Informationsübertragung zwischen einem als Sender vorgesehenen Teilnehmer und mehreren als Empfänger vorgesehenen Teilnehmern möglich. Dies wird auch als "Point-to-Multipoint-Übertragung" bezeichnet. Die Kommunikation ist demnach einseitig, also von dem Sender ausgehend an die Empfänger gerichtet. Die hier von dem Sender bereitgestellten Daten und/oder Informationen können auch von mehreren Sendeeinrichtungen ausgestrahlt werden.

Bei einer sich vom Rundfunk unterscheidenden Individualkommunikation, wie sie bspw. beim Mobiltelefonieren erfolgt, ist dagegen eine wechselseitige Kommunikation zwischen üblicherweise zwei gleichberechtigten Teilnehmern, die jeweils zugleich Sender und Empfänger sind, vorgesehen.

Durch Ausstrahlung des Verbindungsaufrufs, insbesondere eines sog. "Push"-"Session Initiation Request" (SIR), über ein digitales Rundfunksystem ist es möglich, einen zusätzlichen Mechanismus für die Übertragung eines OMA (Open Mobile Alliance) "Push Session Request" bereitzustellen. Durch Übertragung des Verbindungsaufrufs über Rundfunk kann einer auch großen Anzahl relevanter Teilnehmern signalisiert werden, dass eine Verbindung zu einem bestimmten Server aufgebaut werden soll. Eine derartige Kontaktaufnahme ist unverbindlich und bei geringen Kosten sowie geringem Sendeaufwand möglich.

Der Verbindungsaufruf wird im Rahmen der Erfindung üblicherweise dazu benutzt, um Ereignisse, die für einen Nutzer des Datenendgeräts bestimmt sind, anzukündigen. Ebenso können notwendige Veränderungen an einer Einrichtung oder einem System vorgenommen werden. Bei einer derartigen Einrichtung kann es sich um das Datenendgerät und/oder eine mit dem Datenendgerät bspw. über Datenaustausch zusammenwirkende Einrichtung handeln. Der Verbindungsaufruf kann Daten für eine Anzeige wichtiger Informationen, von Kalenderereignissen, von Terminänderungen, Verfügbarkeit von neuen Anwendungen und/oder Diensten (Services), Paging, IT Administration usw. umfassen. Mittels des Verbindungsaufrufs kann die Verfügbarkeit derartiger Daten angekündigt werden.

Für Anwendungen der Erfindung in einem Fahrzeug, das mindestens ein zur Durchführung der Erfindung ausgebildetes Datenendgerät aufweist und/oder mit einem derartigen Datenendgerät zu verbinden ist, liegt ein ähnliches Mobilitäts-Szenario vor, so dass in möglichen Anwendungsfällen dem Fahrzeug oder zumindest einem Gerät des Fahrzeugs Daten bereitgestellt werden können.

Darüber hinaus ergeben sich im Fahrzeug aber auch noch weitere Optionen, insbesondere um die Verfügbarkeit von Software-Aktualisierungen oder bestimmten Herstellerinformationen anzuzeigen. Da ein Aufbau einer "Push Verbindung" von einem Server über ein Mobilfunknetz in der Regel nicht möglich ist, kann der Verbindungsaufruf auch als eine initiierende Kurznachricht über Rundfunk versendet werden.

Bei Ausführung der Erfindung kann alternativ der Versand einer Initiierungsnachricht und somit des Verbindungsaufrufs an das Datenendgerät bzw. ein mobiles Terminal über SIR oder eine entsprechende Nachricht über digitalen Rundfunk (DAB, DVB) vorgesehen sein.

Mit der Erfindung wird vorgeschlagen, "Push Session Requests", z.B. SIR Nachrichten über Broadcast-Systeme, also über Rundfunksendeeinrichtungen oder mindestens ein Rundfunknetz mittels geeigneter Sendeeinrichtungen als Luftschnittstellen auszustrahlen, um die als Empfänger vorgesehenen Datenendgeräte mit dem Verbindungsaufruf zur Einleitung bzw. Initiierung einer Session mit dem insbesondere als Internet-Server ausgebildeten Server oder der Netzübergangseinrichtung anzuregen.

So ist es denkbar, dass eine Herstellerfirma zukünftig Bandbreiten im digitalen Rundfunk anmietet, um exklusive Informationen an einen großen Nutzerkreis auszustrahlen. Auf diese Weise kann Nutzern dauerhaft ein Informationsservice zur Verfügung gestellt werden. Innerhalb dieses Informationsangebotes können im digitalen Rundfunk verschiedene Datenformate übertragen werden, die auch in anderen multimedialen Systemen, bspw. online-Diensten oder Internet, benutzt werden. So lassen sich HTTP- oder HTML-codierte Dokumente mit relativ geringem Aufwand auch über DAB bzw. DVB ausstrahlen.

Zur Realisierung der Erfindung kann auf der grundlegenden Struktur der von der OMA vorgeschlagenen und vorstehend kurz beschrieben Push Architektur aufgebaut werden. Die grundsätzlichen Ideen sind aber auch auf andere Systeme und Protokolle übertragbar. Der Verbindungsaufruf als "Session Request" ist daher als Verallgemeinerung einer OMA "SIR"-Nachricht zu verstehen, also einer Nachricht, die von einem Rundfunkbetreiber ausgestrahlt wird, um das typischerweise mobile Datenendgerät zur Verbindung mit einem bestimmten Server aufzufordern.

Eine Netzübergangseinrichtung "Push Gateway" als eine erste Luftschnittstelle ist als Verallgemeinerung des OMA-PPG zu verstehen und als ein Protokollumsetzer zur Datenübermittlung geeignet. Hierbei ist als PPG ("Push Proxy Gateway") ein Protokollumsetzer zur insbesondere drahtlosen Datenübermittlung vorgesehen. Die Netzübergangseinrichtung kann als Server Kontakt zu einem Rundfunkbetreiber aufnehmen und Inhalte des Verbindungsaufrufs an die insbesondere terrestrische Sendeeinrichtung als eine zweite Luftschnittstelle übermitteln. Die Netzübergangseinrichtung ist ebenfalls zur Übermittlung der eigentlich bereitzustellenden Daten zwischen dem Server und dem Datenendgerät geeignet.

Zur Einbettung des Verbindungsaufrufs (Session Request) in den Datenstrom des vorzugsweise digitalen Rundfunks sind folgende drei Optionen denkbar.

So kann ein rundfunkeigenes Netzwerkprotokoll zur Umsetzung des Verbindungsaufrufs zur Anwendung kommen. Das Netzwerkprotokoll/Gateway (PPG) zum Versenden des Verbindungsaufrufs wird vorteilhafterweise in den Sendebetrieb des Rundfunks integriert. Demnach kann der Rundfunkbetreiber selbst eine Netzübergangseinrichtung bzw. ein Netzwerkprotokoll unterhalten, die bzw. das öffentlich zugänglich und aus dem Internet erreichbar ist und eine SIR-Anfragen in ein zur Übertragung durch den Rundfunk angepasstes Format umwandelt und somit den Verbindungsaufruf bereitstellt. Folglich ist eine direkte Verbindung zwischen dem Internet-Server als Push Initiator und einem Rundfunk-Server möglich.

Alternativ ist eine Verbindung zwischen dem Protokollumsetzer zur Datenübermittlung PPG und dem Rundfunk über ein spezielles Protokoll möglich. Unterhält der Rundfunkbetreiber nämlich kein echtes, direkt erreichbares Push-Gateway, so muss zwischen der durch der Server zugänglichen Netzübergangseinrichtung und dem Rundfunkbetreiber eine Kommunikation stattfinden, um die Ausstrahlung des Verbindungsaufrufs über Rundfunk anzufordern. Über ein Kommunikationsprotokoll wird dem Rundfunktreiber dabei signalisiert, welche Terminals und Anwendungen betroffen sind und welche Server später vom Terminal zu kontaktieren sind.

Eine weitere Optionen zur Ausstrahlung des Verbindungsaufrufs (SIR) über Rundfunk besteht darin, dass der Push-Initiator Push-Informationen direkt, bspw. über ein proprietäres Protokoll, das noch nicht existiert, an einen Betreiber des Rundfunks sendet. Ein PPG oder eine Netzübergangseinrichtung wird in diesem Fall nicht benutzt.

Hierzu können Parameter, die für alle drei voranstehend beschriebenen Optionen gültig sind, festgelegt und als Zusatzdaten an einen Rundfunkbetreiber übermittelt werden. So kann bestimmt werden, wie lange der Verbindungsaufruf gültig ist. Es kann zudem übermittelt werden, wie häufig der Verbindungsaufruf im Rundfunkbetrieb ausgestrahlt werden soll. Des weiteren kann eine Signalisierung für Abbruch, Modifikation und/oder Ausschluss von Empfängern und somit von Datenendgeräten vorgenommen werden. Der Rundfunkbetreiber kann den Verbindungsaufruf verschlüsselt ausstrahlen, damit nur ausgewählte Datenendgeräte und somit Teilnehmer davon in Kenntnis versetzt werden.

Der Verbindungsaufruf kann im Rundfunkbetrieb grundsätzlich in verschiedenen Formaten übermittelt werden. Falls der Verbindungsaufruf im OMA Session Request formatiert ist, kann signalisiert werden, welche Datenendgeräte und Anwendungen betroffen sind und welche Server über welche Protokolle später von welchen Datenendgeräten zu kontaktieren sind.

Die Push-Information kann entsprechend in den Rundfunk-Datenstrom eingebaut werden, dazu kann ein Rundfunk- bzw. Broadcast-Header-Name, z.B. "SIR", "SIA", "application/vnd.wap.sia", "SR" oder ein anderer Name zur Kennzeichnung von Push Daten innerhalb eines Datenstroms des Rundfunks eingeführt werden. Beim DAB kann das z.B. im Rahmen des sog. MOT Protokolls durch Einführung eines zusätzlichen Datenformats erfolgen.

In einem Fahrzeug, das mindestens ein Datenendgerät aufweist, kann der Rundfunk-Datenstrom ausgewertet werden. Verbindungsaufrufe können für spätere Verarbeitungen zwischengespeichert werden. Bei einem Abgleich der Verbindungsaufrufe mit einem Nutzerprofil des Fahrzeugs kann darüber entschieden werden, welche externen Server überhaupt kontaktiert werden sollen und welche Anwendungen relevant sind. Dazu kann bspw. eine Tabelle mit einer Auflistung von Server-Adressen, Anwendungen und/oder Herstellern im Fahrzeug vorhaden sein. Damit kann bei Empfang eines Verbindungsaufrufs die darin enthaltene Zieladresse sofort dahingehend ausgewertet werden, ob die Adresse bekannt und sicher ist, um keine Verbindung zu unbekannten Adressen herzustellen. Zudem kann der Nutzer gefragt werden, ob die Verbindung hergestellt werden soll.

Kurze Beschreibung der Zeichnungen
Figur 1 zeigt in schematischer Darstellung jeweils eine Ausführungsform einer Anordnung zur Bereitstellung von Daten und ein Datenendgerät.
Figur 2 zeigt in schematischer Darstellung ein Diagramm zu einer Ausführungsform eines Verfahrens zur Bereitstellung von Daten.
Figur 3 zeigt in schematischer Darstellung eine Anordnung zur Realisierung einer "OMA Push Architektur" nach dem Stand der Technik.
Figur 4 zeigt in schematischer Darstellung eine Anordnung zur Bereitstellung eines "Session Initiation Requests" nach dem Stand der Technik.

### Ausführungsformen der Erfindung

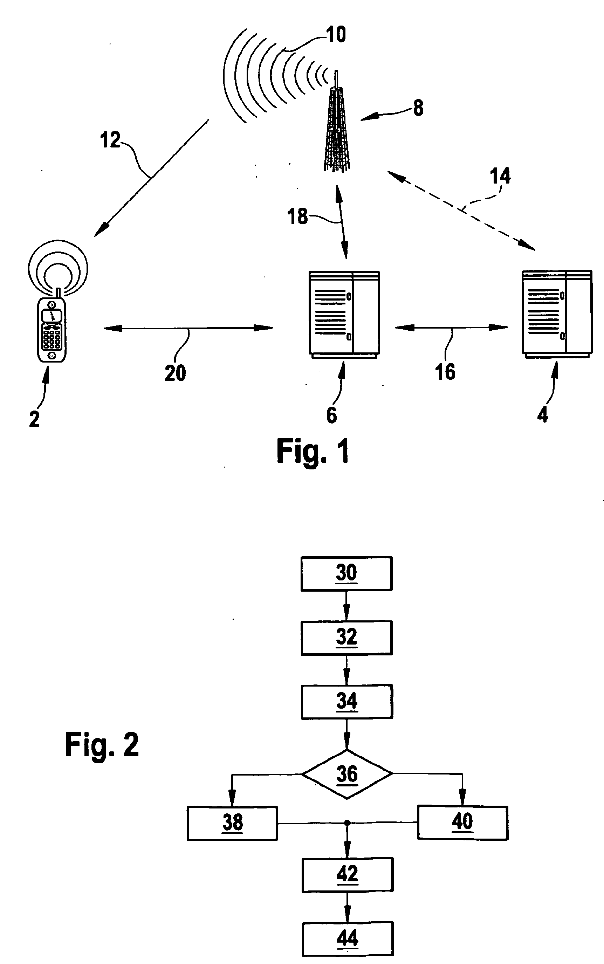

Figur 1 zeigt eine Ausführungsform einer Anordnung zur Bereitstellung von Daten für ein Datenendgerät 2, das hier als Mobiltelefon ausgebildet ist. Die Anordnung umfasst einen Internet-Server 4, eine vermittelnde Netzübergangseinrichtung 6 und eine Sendeeinrichtung 8 für Rundfunk 10.

Falls vorgesehen ist, dass der Internet-Server 4 neue Daten für das Datenendgerät 2 parat hat, wird das Datenendgerät 2 über die Verfügbarkeit dieser Daten mittels eines Verbindungsaufrufs 12 informiert. Dieser Verbindungsaufruf 12 wird ausgehend von der Sendeeinrichtung 8 über Rundfunk 10 und somit ein Rundfunknetz, das in dieser Ausführungsform als unidirektionales Funknetz verwendet wird, übermittelt.

Figur 1 zeigt zwei Möglichkeiten, wie der durch die Sendeeinrichtung 8 unidirektional auszustrahlende Verbindungsaufruf 12 ausgehend von dem Internet-Server 4 eingeleitet werden kann.

Typischerweise wird die Netzübergangseinrichtung 6 die Daten zwischen dem Internet-Server 4 und dem Rundfunksystem anpassen. Über einen Datenaustausch 16 unter Verwendung eines "push-access"-Protokolls werden Informationen, die den Verbindungsaufruf betreffen, von dem Internet-Server 14 zu der Netzübergangseinrichtung 6 und von der Netzübergangseinrichtung 6 nach entsprechender Aufbereitung durch Kommunikation 18 zu der Sendeeinrichtung 8 übermittelt. Von dort aus erfolgt eine Ausstrahlung des Verbindungsaufrufs 12 über Rundfunk 10. Die Netzübergangseinrichtung 6 kann auch unmittelbar in den Betrieb des Rundfunks 10 intergriert sein.

Falls die als Luftschnittstelle vorgesehene Sendeeinrichtung 8 des Rundfunks 10 über eine geeignete Netzschnittstelle verfügt, kann eine Nachricht des Verbindungsaufrufs 12 durch direkte Übermittlung 14 von dem Internet-Server 4 zu der Sendeeinrichtung 8 eingeleitet werden.

Sobald das Datenendgerät 2 den Verbindungsaufruf 12 erhalten hat und somit eine Information darüber vorliegt, dass die Daten verfügbar sind, ist es einem Nutzer bzw. einer entsprechenden Anwendung des Datenendgeräts 2 freigestellt, sich die Daten zu beschaffen. Hierzu ist vorgesehen, dass mit dem Datenendgerät 2 über ein Mobilfunknetz eine zum Übertragen der Daten geeignete bidirektionale Verbindung 20 zu der Netzübergangseinrichtung 6 aufgebaut wird, die nunmehr als Luftschnittstelle für den Internet-Server 4 dient. Das Mobilfunknetz wird in dieser Ausführungsform als ein bidirektionales Funknetz verwendet. Es ist vorgesehen, dass die Daten von dem Internet-Server 4 über den Datenaustausch 16 zu der Netzübergangseinrichtung 6 und von dort über die von dem Datenendgerät 2 geöffnete Verbindung 20 unter Nutzung eines "Push over-the-air"-Protokolls zu dem mindestens einen Datenendgerät 2 übertragen werden. Alternativ ist auch eine direkte Verbindungsaufnahme von dem Datenendgerät 2 zu dem Internet-Server 4 denkbar.

Eine Ausführungsform für einen Ablauf des erfindungsgemäßen Verfahrens ist in dem Diagramm aus Figur 2 dargestellt. Dabei legt mindestens ein Datenendgerät bei einer Profilierung 30 ein Profil mit erlaubten Servern und somit Push-Initiatoren fest, so dass ausgehend von solchen Servern dem mindestens einen Datenendgerät Daten angeboten werden dürfen. Bei einer optional folgenden Anmeldung 32 ist vorgesehen, dass sich das mindestens eine Datenendgerät bei einem Service zur Bereitstellung von Daten eines als Push-Initiator ausgebildeten Servers anmeldet.

Bei einer Kontaktaufnahme 34 stehen dem Server Daten, die für das mindestens eine Datenendgerät geeignet sind, zur Verfügung und der Server informiert das Datenendgerät darüber. Bei einer nachfolgenden Entscheidung 36 wird darüber entschieden, auf welchem Weg eine Information über die Verfügbarkeit der Daten an das mindestens eine Datenendgerät übermittelt wird.

Es ist bei dieser Ausführungsform der Erfindung vorgesehen, dass ein Verbindungsaufruf, der das mindestens eine Datenendgerät über die Verfügbarkeit der Daten informieren soll, von einer Sendeeinrichtung über Rundfunk übermittelt wird. Im Rahmen der Entscheidung 36 stellt sich die Frage, ob hierfür eine als PPG ausgebildete Netzübergangseinrichtung verwendet wird. Falls ja, so werden die Informationen für den Verbindungsaufruf über die Netzübergangseinrichtung an die Sendeeinrichtung auf indirektem Weg 38 übermittelt. Falls nein, werden die Informationen für den Verbindungsaufruf auf direktem Weg 40 an die Sendeeinrichtung übermittelt.

Unabhängig davon, auf welchem Weg 38, 40 die Informationen für den Verbindungsaufruf zu der Sendeeinrichtung gelangen, ist bei einer Ausstrahlung 42 vorgesehen, dass der Verbindungsaufruf in einen Datenstrom des Rundfunks eingebunden und somit an das mindestens eine Datenendgerät drahtlos übermittelt wird. Nach Empfang 44 des Verbindungsaufrufs wertet das mindestens eine Datenendgerät den Verbindungsaufruf aus und stellt, sofern erwünscht, zum Abruf der durch den Server angekündigten Daten eine Verbindung zu dem Server her.

## Patentansprüche

1. Verfahren zur Signalisierung einer Verbindungsaufforderung zwischen Datenverarbeitungsgeräten, bei dem über Rundfunk (10) ein Verbindungsaufruf (12) ausgestrahlt wird, mit dem mindestens ein Datenendgerät (2) dazu aufgerufen wird, über ein Funknetz eine zum Übertragen der Daten geeignete Verbindung (20) aufzubauen, **dadurch gekennzeichnet, dass** mit dem Verbindungsaufruf (12) eine Zugangsberechtigung zu den Daten übermittelt wird.

2. Verfahren nach Anspruch 1, bei dem die zum Übertragen der Daten geeignete Verbindung (20) über ein als Mobilfunknetz ausgebildetes Funknetz aufgebaut wird.

3. Verfahren nach Anspruch 2, bei dem eine direkte Verbindung (20) von dem Datenendgerät (2) zu einem Server (4), der die Daten zur Verfügung stellt, aufgebaut wird.

4. Verfahren nach einem der voranstehenden Ansprüche, bei dem der Verbindungsaufruf (12) für das mindestens eine Datenendgerät (2) verschlüsselt ausgestrahlt wird.

5. Verfahren nach einem der voranstehenden Ansprüche, bei dem von einem Push-Initiator zu einem Rundfunksystem ein direkter Kontakt aufgenommen wird.

6. Verfahren nach einem der vorhergehenden Ansprüche, bei dem von einem Push-Initiator zu dem Rundfunksystem Kontakt über einen öffentlichen als "Push Proxy Gateway" ausgebildeten Protokollumsetzer aufgenommen wird.

7. Verfahren nach Anspruch 6, bei dem das "Push Proxey Gateway" in den Systembetrieb des Rundfunksystems integriert ist.

8. Verfahren nach einem der voranstehenden Ansprüche, bei dem ein Abgleich mit einem Profil eines Nutzers des mindestens einen Datenendgeräts (2) und evtl. eine Abfrage vorgenommen wird.

9. Anordnung zur Signalisierung einer Verbindungsaufforderung zwischen Datenverarbeitungsgeräten, die mindestens eine Sendeeinrichtung (8) aufweist, wobei die mindestens eine Sendeeinrichtung (8) dazu ausgebildet ist, über Rundfunk (10) einen Verbindungsaufruf (12) auszustrahlen, mit dem mindestens ein Datenendgerät (2) dazu aufgerufen wird, über ein Funknetz eine zum Übertragen der Daten geeignete Verbindung (20) aufzubauen, **dadurch gekennzeichnet, dass** mit dem Verbindungsaufruf (12) eine Zugangsberechtigung zu den Daten übermittelt wird.

10. Anordnung nach Anspruch 9, die mindestens einen Server (4) aufweist, der dazu ausgebildet ist, die Daten zur Verfügung zu stellen.

11. Anordnung nach Anspruch 10, die mindestens eine Netzübergangseinrichtung (6) aufweist, die dazu ausgebildet ist, einen drahtlosen Datenaustausch mit dem Server (4) zu gewährleisten.

12. Computerprogramm mit Programmcodemitteln, um alle Schritte eines Verfahrens nach einem der Ansprüche 1 bis 8 durchzuführen, wenn das Computerprogramm auf einem Computer oder einer entsprechenden Recheneinheit, insbesondere in einer Anordnung nach einem der Ansprüche 9 bis 11, ausgeführt wird.

13. Computerprogrammprodukt mit Programmcodemitteln, die auf einem computerlesbaren Datenträger gespeichert sind, um alle Schritte eines Verfahrens nach einem der Ansprüche 1 bis 8 durchzuführen, wenn das Computerprogramm auf einem Computer oder einer entsprechenden Recheneinheit, insbesondere in einer Anordnung nach einem der Ansprüche 9 bis 11, ausgeführt wird.

## Claims

1. Method for signalling a connection request between data processing devices, in which broadcast radio (10) is used to transmit a connection call (12) that is used to call upon at least one data terminal (2) to use a radio network to set up a connection (20) that is suitable for transmitting the data, **characterized in that** access authorization for the data is transmitted with the connection call (12).

2. Method according to Claim 1, in which the connection (20) that is suitable for transmitting the data is set up using a radio network in the form of a mobile radio network.

3. Method according to Claim 2, in which a direct connection (20) is set up from the data terminal (2) to a server (4) that provides the data.

4. Method according to one of the preceding claims, in which the connection call (12) is transmitted for the at least one data terminal (2) in encrypted form.

5. Method according to one of the preceding claims, in which a push initiator establishes direct contact with a broadcast radio system.

6. Method according to one of the preceding claims, in which a push initiator establishes contact with the broadcast radio system using a public protocol converter in the form of a "Push Proxy Gateway".

7. Method according to Claim 6, in which the "Push Proxy Gateway" is integrated in the system operation of the broadcast radio system.

8. Method according to one of the preceding claims, in which a match against a profile of a user of the at least one data terminal (2), and possibly a query, is performed.

9. Arrangement for signalling a connection request between data processing devices that has at least one transmission device (8), wherein the at least one transmission device (8) is designed to use broadcast radio (10) to transmit a connection call (12) that is used to call upon at least one data terminal (2) to use a radio network to set up a connection (20) that is suitable for transmitting the data, **characterized in that** access authorization for the data is transmitted with the connection call (12).

10. Arrangement according to Claim 9, which has at least one server (4) that is designed to provide the data.

11. Arrangement according to Claim 10, which has at least one network gateway device (6) that is designed to ensure wireless data interchange with the server (4).

12. Computer program having program code means in order to perform all the steps of a method according to one of Claims 1 to 8 when the computer program is executed on a computer or a corresponding computation unit, particularly in an arrangement according to one of Claims 9 to 11.

13. Computer program product having program code means that are stored on a computer-readable data storage medium in order to perform all the steps of a method according to one of Claims 1 to 8 when the computer program is executed on a computer or a corresponding computation unit, particularly in an arrangement according to one of Claims 9 to 11.

## Revendications

1. Procédé de signalisation d'une demande de connexion entre des appareils de traitement de données, dans lequel un appel de connexion (12) est diffusé par radiodiffusion (10), au moyen duquel au moins un terminal de données (2) est appelé pour établir, par l'intermédiaire d'un réseau radio, une connexion (20) appropriée pour la transmission de données, **caractérisé en ce qu'**une autorisation d'accès aux données est transmise avec l'appel de connexion (12).

2. Procédé selon la revendication 1, dans lequel la connexion (20) appropriée pour la transmission de données est établie par l'intermédiaire d'un réseau radio réalisé sous la forme d'un réseau mobile.

3. Procédé selon la revendication 2, dans lequel une connexion directe (20) est établie du terminal de données (2) à un serveur (4) qui fournit les données.

4. Procédé selon l'une quelconque des revendications précédentes, dans lequel l'appel de connexion (12) est diffusé de façon cryptée pour l'au moins un terminal de données (2).

5. Procédé selon l'une quelconque des revendications précédentes, dans lequel un contact direct est accepté par un initiateur de flux poussé vers un système de radiodiffusion.

6. Procédé selon l'une quelconque des revendications précédentes, dans lequel un contact est accepté par un initiateur de flux poussé vers le système de radiodiffusion par l'intermédiaire d'un convertisseur de protocole public réalisé sous la forme d'une "passerelle mandataire de flux poussé".

7. Procédé selon la revendication 6, dans lequel la "passerelle mandataire de flux poussé" est intégrée au fonctionnement du système de radiodiffusion.

8. Procédé selon l'une quelconque des revendications précédentes, dans lequel un alignement avec un profil d'un utilisateur de l'au moins un terminal de données (2) et, le cas échéant, avec une requête est effectué.

9. Dispositif de signalisation d'une demande de connexion entre des appareils de traitement de données, comprenant au moins un dispositif d'émission (8), dans lequel l'au moins un dispositif d'émission (8) est conçu pour diffuser par radiodiffusion (10) un appel de connexion (12) au moyen duquel au moins un terminal de données (2) est appelé pour établir par l'intermédiaire d'un réseau radio une connexion (20) appropriée pour la transmission de données, **caractérisé en ce qu'**une autorisation d'accès aux données est transmise avec l'appel de connexion (12).

10. Dispositif selon la revendication 9, comprenant au moins un serveur (4) qui est conçu pour fournir les données.

11. Dispositif selon la revendication 10, comprenant au moins un dispositif d'accès au réseau (6) qui est conçu pour assurer un échange de données sans fil avec le serveur (4).

12. Programme informatique comprenant des moyens à code de programme destinés à mettre en oeuvre toutes les étapes d'un procédé selon l'une quelconque des revendications 1 à 8 lorsque le programme informatique est exécuté sur un ordinateur ou sur une unité de calcul correspondante, notamment un dispositif selon l'une quelconque des revendications 9 à 11.

13. Produit de programme informatique comprenant des moyens à code de programme qui sont stockés sur un support de données lisible par ordinateur afin de mettre en oeuvre toutes les étapes d'un procédé selon l'une quelconque des revendications 1 à 8, lorsque le programme informatique est exécuté sur un ordinateur ou une unité de calcul correspondante, notamment un dispositif selon l'une quelconque des revendications 9 à 11.
